# EUROPEAN PATENT APPLICATION

(11) **EP 4 572 432 A1**
(43) Date of publication of application: **18.06.2025**
(21) Application number: 22954458.0
(22) Date of filing: 10.08.2022
(51) Int. Cl.: H04W 52/36

(54) **MULTI-DOWNLINK CONTROL INFORMATION (M-DCI)-BASED METHOD AND APPARATUS FOR REPORTING POWER HEADROOM REPORT (PHR)**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/111583
(87) International publication number: WO 2024/031486

(57) **Abstract**

The present disclosure relates to the field of communications, and provides a multi-downlink control information (M-DCI)-based method and apparatus for reporting a power headroom report (PHR). The method of the present disclosure comprises: according to a first maximum number of PHRs for reporting supported by a UE and a second maximum number of PHRs for reporting configured by a network device, the UE determining the number M of PHRs to be reported; and reporting respective PHRs of M physical uplink channels among N physical uplink channels scheduled by N physical downlink control channels (PDCCHs) to the network device, N being greater than or equal to 2, and M being less than or equal to N. Thus, a technical solution of reporting PHRs under M-DCI scheduling is provided. Simultaneous uplink transmission based on multiple panels can be supported under M-DCI scheduling, such that the transmission throughput rate and transmission reliability of an uplink system can be improved, and the accuracy of uplink transmission scheduling for each panel on a network side can be improved.

## Description

### TECHNICAL FIELD

The disclosure relates to the field of communication technology, in particular to a power headroom report (PHR) reporting method based on multi downlink control information (M-DCI) and an apparatus thereof.

### BACKGROUND

In a wireless communication system, under multi downlink control information (M-DCI) scheduling, different antenna panels schedule their own physical uplink shared channel (PUSCH) transmissions based on their separate physical downlink control channel (PDCCH) scheduling information. Under the M-DCI scheduling, in order to support simultaneous uplink transmission based on multi panels, how to report power headroom reports (PHRs) has become an urgent problem to be solved.

### SUMMARY

The present disclosure provides a power headroom report (PHR) reporting method based on multi downlink control information (M-DCI) and an apparatus thereof, capable of improving transmission throughput and transmission reliability of an uplink system transmission, and improving an accuracy of uplink transmission scheduling of each panel on a network side.

According to a first aspect of embodiments of the disclosure, a power headroom report (PHR) reporting method based on multi downlink control information (M-DCI) is provided. The method is performed by a user equipment (UE), and includes:
determining a numeric count of PHRs to be reported, M, according to a first maximum PHR reporting number supported by the UE and a second maximum PHR reporting number configured by a network device; and
reporting respective PHRs of M physical uplink channels among N physical uplink channels scheduled by N physical downlink control channels (PDCCHs) to the network device, where N is greater than or equal to 2, and M is smaller than or equal to N.

Optionally, M is the smaller one of the first maximum PHR reporting number supported by the UE and the second maximum PHR reporting number configured by the network device.

Optionally, the method further includes: determining reporting priorities of the respective PHRs of the N physical uplink channels according to a preconfiguration rule;
in which, reporting the respective PHRs of the M physical uplink channels among the N physical uplink channels scheduled by the N PDCCHs to the network device includes:
determining the M physical uplink channels from the N physical uplink channels according to the reporting priorities; and
reporting the respective PHRs of the M physical uplink channels to the network device.

Optionally, in a case where time domain resources of the N physical uplink channels fully overlap, the preconfigured rule is that the reporting priorities of the PHRs depend on at least one of:
control resource set (CORESET) pool indexes associated with the physical uplink channels;
sending times of the PDCCHs corresponding to the physical uplink channels;
calculated values of the PHRs to be reported;
terminal capability indexes associated with transmission control information corresponding to the physical uplink channels; or
antenna panel identifiers associated with the physical uplink channels.

Optionally, in a case where time domain resources of the N physical uplink channels partially overlap or do not overlap, the preconfigured rule is that the reporting priorities of the PHRs depends on at least one of:
sending times of the physical uplink channels;
control resource set (CORESET) pool indexes associated with the physical uplink channels;
sending times of the PDCCHs corresponding to the physical uplink channels;
calculated values of the PHRs to be reported;
terminal capability indexes associated with transmission control information corresponding to the physical uplink channels; or
antenna panel identifiers associated with the physical uplink channels.

Optionally, each of the values of the PHRs to be reported is calculated based on a maximum transmitting power of a corresponding antenna panel or a maximum transmitting power of the UE.

Optionally, for any two physical uplink channels,
in a case where a CORESET pool index associated with a first physical uplink channel is less than a CORESET pool index associated with a second physical uplink channel, a reporting priority of a PHR of the first physical uplink channel is higher than a reporting priority of a PHR of the second physical uplink channel;
in a case where a PDCCH sending time corresponding to the first physical uplink channel is earlier than a PDCCH sending time corresponding to the second physical uplink channel, the reporting priority of the PHR of the first physical uplink channel is higher than the reporting priority of the PHR of the second physical uplink channel;
in a case where a value of a PHR to be reported of the first physical uplink channel is less than a value of a PHR to be reported of the second physical uplink channel, the reporting priority of the PHR of the first physical uplink channel is higher than the reporting priority of the PHR of the second physical uplink channel;
in a case where a terminal capability index associated with transmission control information corresponding to the first physical uplink channel is less than a terminal capability index associated with transmission control information corresponding to the second physical uplink channel, the reporting priority of the PHR of the first physical uplink channel is higher than the reporting priority of the PHR of the second physical uplink channel; or
in a case where an antenna panel identifier associated with the first physical uplink channel is less than an antenna panel identifier associated with the second physical uplink channel, the reporting priority of the PHR of the first physical uplink channel is higher than the reporting priority of the PHR of the second physical uplink channel.

Optionally, for any two physical uplink channels, in a case where a sending time of a first physical uplink channel is earlier than a sending time of a second physical uplink channel, a reporting priority of a PHR of the first physical uplink channel is higher than a reporting priority of a PHR of the second physical uplink channel.

Optionally, determining the M physical uplink channels from the N physical uplink channels according to the reporting priorities includes:
determining first M physical uplink channels according to ordering of the N physical uplink channels that is based on the reporting priorities of the respective PHRs.

According to a second aspect of embodiments of the disclosure, a PHR reporting method based on M-DCI is provided. The method is performed by a network device, and includes:
receiving respective PHRs of M physical uplink channels reported by a user equipment (UE);
in which, the UE determines M according to a first maximum PHR reporting number supported by the UE and a second maximum PHR reporting number configured by the network device, and the M physical uplink channels are physical uplink channels among N physical uplink channels scheduled by N physical downlink control channels (PDCCHs), where M is smaller than or equal to N, and N is greater than or equal to 2.

Optionally, M is the smaller one of the first maximum PHR reporting number supported by the UE and the second maximum PHR reporting number configured by the network device.

According to a third aspect of embodiments of the disclosure, a PHR reporting apparatus based on M-DCI is provided. The apparatus is configured in a user equipment (UE), and includes:
a processing module, configured to determine a numeric count of PHRs to be reported, M, according to a first maximum PHR reporting number supported by the UE and a second maximum PHR reporting number configured by a network device; and
a transceiver module, configured to report respective PHRs of M physical uplink channels among N physical uplink channels scheduled by N physical downlink control channels (PDCCHs) to the network device, where N is greater than or equal to 2, and M is smaller than or equal to N.

Optionally, M is the smaller one of the first maximum PHR reporting number supported by the UE and the second maximum PHR reporting number configured by the network device.

Optionally, the processing module is further configured to determine reporting priorities of the respective PHRs of the N physical uplink channels according to a preconfiguration rule; and determine the M physical uplink channels from the N physical uplink channels according to the reporting priorities; and
Optionally, in a case where time domain resources of the N physical uplink channels fully overlap, the preconfigured rule is that the reporting priorities of the PHRs depend on at least one of:
control resource set CORESET pool indexes associated with the physical uplink channels;
sending times of the PDCCHs corresponding to the physical uplink channels;
calculated values of the PHRs to be reported;
terminal capability indexes associated with transmission control information corresponding to the physical uplink channels; or
antenna panel identifiers associated with the physical uplink channels.

Optionally, in a case where time domain resources of the N physical uplink channels partially overlap or do not overlap, the preconfigured rule is that the reporting priorities of the PHRs depends on at least one of:
sending times of the physical uplink channels;
control resource set CORESET pool indexes associated with the physical uplink channels;
sending times of the PDCCHs corresponding to the physical uplink channels;
calculated values of the PHRs to be reported;
terminal capability indexes associated with transmission control information corresponding to the physical uplink channels; or
antenna panel identifiers associated with the physical uplink channels.

Optionally, the processing module is further configured to calculate each of the values of the PHRs to be reported based on a maximum transmitting power of a corresponding antenna panel or a maximum transmitting power of the UE.

Optionally, for any two physical uplink channels,
in a case where a CORESET pool index associated with a first physical uplink channel is less than a CORESET pool index associated with a second physical uplink channel, a reporting priority of a PHR of the first physical uplink channel is higher than a reporting priority of a PHR of the second physical uplink channel;
in a case where a PDCCH sending time corresponding to the first physical uplink channel is earlier than a PDCCH sending time corresponding to the second physical uplink channel, the reporting priority of the PHR of the first physical uplink channel is higher than the reporting priority of the PHR of the second physical uplink channel;
in a case where a value of a PHR to be reported of the first physical uplink channel is less than a value of a PHR to be reported of the second physical uplink channel, the reporting priority of the PHR of the first physical uplink channel is higher than the reporting priority of the PHR of the second physical uplink channel;
in a case where a terminal capability index associated with transmission control information corresponding to the first physical uplink channel is less than a terminal capability index associated with transmission control information corresponding to the second physical uplink channel, the reporting priority of the PHR of the first physical uplink channel is higher than the reporting priority of the PHR of the second physical uplink channel; or
in a case where an antenna panel identifier associated with the first physical uplink channel is less than an antenna panel identifier associated with the second physical uplink channel, the reporting priority of the PHR of the first physical uplink channel is higher than the reporting priority of the PHR of the second physical uplink channel.

Optionally, for any two physical uplink channels, in a case where a sending time of a first physical uplink channel is earlier than a sending time of a second physical uplink channel, a reporting priority of a PHR of the first physical uplink channel is higher than a reporting priority of a PHR of the second physical uplink channel.

Optionally, the transceiver module is configured to determine first M physical uplink channels according to ordering of the N physical uplink channels that is based on the reporting priorities of the respective PHRs.

According to a fourth aspect of embodiments of the disclosure, a PHR reporting apparatus based on M-DCI is provided. The apparatus is configured in a network device, and includes:
a transceiver module, configured to receive respective PHRs of M physical uplink channels reported by a UE;
in which, the UE determines M according to a first maximum PHR reporting number supported by the UE and a second maximum PHR reporting number configured by the network device, and the M physical uplink channels are physical uplink channels among N physical uplink channels scheduled by N physical downlink control channels (PDCCHs), where M is smaller than or equal to N, and N is greater than or equal to 2.

Optionally, M is the smaller one of the first maximum PHR reporting number supported by the UE and the second maximum PHR reporting number configured by the network device.

According to a fifth aspect of embodiments of the disclosure, a communication device is provided and includes: a transceiver; a memory; and a processor, coupled to the transceiver and the memory, respectively, in which the processor is configured to execute computer-executable instructions on the memory, control the transceiver to transmit and receive wireless signals, and is implement the PHR reporting method based on M-DCI as described in the first aspect embodiments or the second aspect embodiments.

According to a sixth aspect of embodiments of the disclosure, a computer storage medium is provided. The computer storage medium stores computer-executable instructions, in which, when the computer-executable instructions are executed by a processor, the PHR reporting method based on M-DCI as described in the first aspect embodiments or the second aspect embodiments is implemented.

According to the PHR reporting method based on M-DCI and the apparatus thereof in an embodiment of the present disclosure, the UE determines the numeric count of PHRs to be reported, M, according to the first maximum PHR reporting number supported by the UE and the second maximum PHR reporting number configured by the network device, and reports respective PHRs of M physical uplink channels among N physical uplink channels scheduled by N PDCCH s to the network device. Therefore, the PHR reporting method based on M-DCI and the apparatus thereof in an embodiment may report multi PHRs under M-DCI scheduling, support uplink simultaneous transmission based on multi panels, improve transmission throughput and transmission reliability of an uplink system transmission, and improve an accuracy of uplink transmission scheduling of each panel on a network side.

Additional aspects and advantages of the disclosure will be set forth in part in the following description, and in part will be obvious from the following description, or may be learned by practice of the present disclosure.

### BRIEF DESCRIPTION OF THE DRAWINGS

The above-mentioned and/or additional aspects and advantages of the present disclosure will be apparent and readily understood from the following description of embodiments taken in combination with the accompanying drawings, in which:
FIG. 1 is a schematic diagram illustrating an example of PUSCH repetition type A according to an embodiment of the present disclosure.
FIG. 2 is a schematic diagram illustrating an example of PUSCH repetition type B according to an embodiment of the present disclosure.
FIG. 3 is a schematic diagram illustrating an example of MP-MTRP transmission under S-DCI scheduling according to an embodiment of the present disclosure.
FIG. 4 is a schematic diagram illustrating an example of MP-MTRP transmission under M-DCI scheduling according to an embodiment of the present disclosure.
FIG. 5 is a schematic diagram showing a resource allocation manner according to an embodiment of the disclosure.
FIG. 6 is a flowchart of a PHR reporting method based on M-DCI according to an embodiment of the disclosure.
FIG. 7 is a flowchart of a PHR reporting method based on M-DCI according to an embodiment of the disclosure.
FIG. 8 is a flowchart of a PHR reporting method based on M-DCI according to an embodiment of the disclosure.
FIG. 9 is a flowchart of a PHR reporting method based on M-DCI according to an embodiment of the disclosure.
FIG. 10 is a block diagram of a PHR reporting apparatus based on M-DCI according to an embodiment of the disclosure.
FIG. 11 is a block diagram of a PHR reporting apparatus based on M-DCI according to an embodiment of the disclosure.
FIG. 12 is a schematic diagram of a communication device according to an embodiment of the disclosure.
FIG. 13 is a schematic diagram of a chip according to an embodiment of the disclosure.

### DETAILED DESCRIPTION

Reference will be made in detail to embodiments of the present disclosure. Examples of the embodiments of the present disclosure will be shown in drawings, in which the same or similar elements and the elements having same or similar functions are denoted by like reference numerals throughout the descriptions. The embodiments described herein according to drawings are illustrative and intended to explain the present disclosure, not construed to limit the present disclosure.

In a wireless communication system, an application of base station transmission and reception points (TRPs)/panels is mainly to improve coverage of a cell edge and provide a more balanced service quality in a service region, and performs coordinated transmission of data between multi TRPs/PANELs using different manners. Considering from a perspective of network form, network deployment with a large number of distributed access points and centralized baseband processing will be more conducive to providing a balanced user experience rate, and significantly reduce delay and signaling overhead caused by handover. Transmission/reception of channels is performed based on multiple beams from multiple angles by utilizing cooperation between multi TRPs or panels, which may better overcome various occlusion/blocking effects and ensure robustness of link connection, and is suitable for ultra-reliable low latency communication (URLLC) services to improve transmission quality and meet reliability requirements.

In the release 16 (R16) research stage, based on an application of coordinated multipoint transmission technology between downlink multi TRPs/PANELs, a physical downlink shared channel (PDSCH) is enhanced for transmission. Since data transmission includes scheduling feedback of uplink and downlink channels, in the research of URLLC, only enhancing the downlink data channel cannot guarantee service performance. Therefore, in the release 17 (R17), a physical downlink control channel (PDCCH), a physical uplink control channel (PUCCH) and a physical uplink shared channel (PUSCH) continue to be enhanced.

It can be understood that two enhancement methods for uplink PUSCH time domain repetition in the R17 are a repetition type A transmission method and a repetition type B transmission method introduced in the R16.

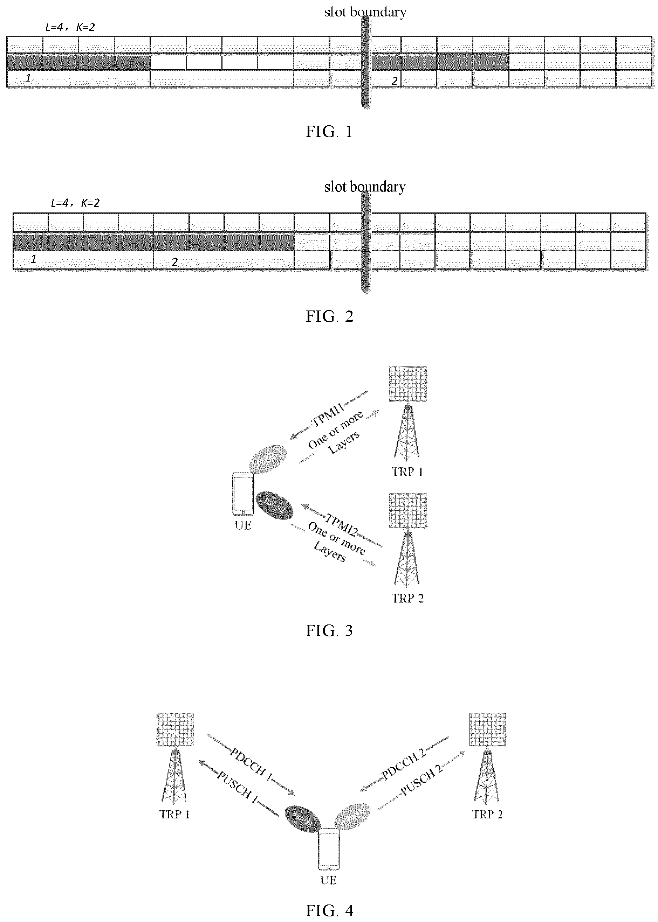

It is further understandable that slot-level slot aggregation PUSCH transmission in the R16 is not suitable for certain situations with low delay requirements and high reliability requirements. FIG. 1 is a schematic diagram illustrating an example of PUSCH repetition type A according to an embodiment of the present disclosure. As illustrated in FIG. 1, one PUSCH is transmitted in K consecutive slots, that is, K transmission occasions. The transmission starts on the S-th symbol in a starting slot, and each transmission occasion lasts for L symbols, and S+L is not beyond a slot boundary. As illustrated in FIG. 1, FIG. 1 shows an example that K related to the transmission occasions is 2, S related to the starting symbol of the start slot is 0, and L related to the symbols lasting for each transmission occasion is 4.

It is further understandable that in order to reduce delay and improve reliability, the R16 supports a PUSCH repetition solution in a unit of mini-slot, and allows PUSCH transmission across slots which may further reduce delay. FIG. 2 is a schematic diagram illustrating an example of PUSCH repetition type B according to an embodiment of the present disclosure. As illustrated in FIG. 2, in a time domain, one PUSCH starts transmission on the S-th symbol in a starting slot, and continuously sends K nominal transmission occasions. Each nominal transmission occasion back-to-back occupies L symbols, transmission S+L can cross a slot boundary. As illustrated in FIG. 2, FIG. 2 shows an example that K related to the transmission occasions is 2, S related to the starting symbol of the start slot is 0, and L related to the symbols lasting for each transmission occasion is 4.

Further, transmission parameter definitions of the repetition type A transmission method and the repetition type B transmission method are as shown in Table (1).

**Table (1)**

| PUSCH mapping type | Normal cyclic prefix | | | Extended cyclic prefix | | |
|---|---|---|---|---|---|---|
| | *S* | *L* | *S+L* | *S* | *L* | *S+L* |
| Type A | 0 | {4,...,14} | {4,...,14} | 0 | {4,...,12} | {4,...,12} |
| Type B | {0,...,13} | {1,...,14} | {1,...,14} for repetition Type A, {1,...,27} for repetition Type B | {0,..., 11} | {1,...,12} | {1,...,12} for repetition Type A, {1,...,23} for repetition Type B |

It can be understood that in the existing multi-TRP transmission, the PDSCH channel supports the coordinated downlink transmission of up to two different TRPs. In a time division multiplexing (TDM) solution, similar to the above Type A transmission method, is slot-level transmission. A mapping method of different beams (a beam direction indication is a transmission configuration indication state (TCI state)) to different repetition transmission occasions may be configured in a semi-static manner by high-level signaling to determine a specific transmission mapping solution of each transport block (TB).

It can be further understood that a mapping relationship between TCI states and transmission occasions mainly includes two solutions including periodic mapping and continuous mapping. In a case where the mapping relationship is the periodic mapping, two TCI states are cyclically mapped to multiple configured transmission occasions in sequence. For example, in a case where 4 transmissions are configured, a TCI state mapping pattern is #1#2#1#2. In a case where the mapping relationship is the continuous mapping, two TCI states are mapped to multiple configured transmission occasions in a continuous cycle. For example, in a case where 4 transmissions are configured, the TCI state mapping pattern is #1#1#2#2. For more than 4 transmissions, the pattern is repeated. For example, for 8 transmissions, the TCI state mapping pattern is #1#1#2#2#1#1#2#2.

It is understandable that before the R17, one power headroom (PH) is calculated and reported for uplink transmission. The R17 introduces per TRP power headroom reporting for the above two uplink PUSCH transmission solutions based on M-TRP (multi-TRP) transmission, that is, for the M-TRP transmission, it is required to report 2 PHRs.

It can be further understood that the R17 does not support transmission scheduled under M-downlink control information (DCI). As for S-DCI scheduling transmission, a reporting method used is that in a case of reporting PHR MAC (mediu access control)-CE (control element) in slot n, for a carrier configured with mTRP PUSCH repetition, a second power headroom report (PHR) value is determined as follows.

In response to a first PHR value being an actual PHR corresponding to the mTRP PUSCH repetition associated with a given TRP, a second PHR value associated with another TRP is the actual PHR only if the repetition is in the slot n. Otherwise, the second PHR value is a virtual PHR.

In response to the first PHR value being the actual PHR but not corresponding to any transmission in the mTRP PUSCH repetition (corresponding to S -TRP PUSCH), the second PHR value is the virtual PHR.

In response to the first PHR value being the virtual PHR, the second PHR value is the virtual PHR.

The PHR reflects an available power of a user equipment (UE), that is, the power headroom. In control of uplink transmission, the PHR is required to be measured and reported to the network device. The UE may send the report only when an uplink shared channel (UL-SCH) is scheduled. The UE triggers a PHR reporting triggering condition according to a protocol.

Herein, what related to multi-TRP uplink transmission is mainly a Type 1 power headroom report. The report includes the power headroom and a maximum transmitting power Pcmax on a component carrier. Pcmax is configured by the network device. Since the network device knows a coding and modulation scheme at a corresponding time point of the power headroom report and a resource size used by the terminal for transmission, the network device may determine an effective combination of a modulation and coding scheme (MCS) and the allocated resource size. In a case where actual PUSCH transmission is absent, the UE may also report Type 1 power headroom.

A current PHR measurement mechanism includes the actual PHR or the virtual PHR. In a case where the PUSCH transmission is present, the UE reports the actual PHR to the network device. In a case where the PUSCH transmission is absent, the UE calculates one PHR based on a predefined PUSCH format and reports the calculated PHR, that is, the virtual PHR, to the network device. The network device may determine a bandwidth and a transmission mode that the UE can send based on power difference information of the UE.

Further, contents of the PHR reporting include:
a maximum power that can be sent on each cell;
a power headroom after the UE sends an uplink control channel (such as PUCCH) in each cell;
a power headroom after the UE sends an uplink data channel (such as PUSCH) in each cell;
a power headroom after the UE sends an uplink sounding channel (such as sounding reference signal (SRS)) in each cell.

In response to the UE having a real physical channel to send, a power headroom after the physical channel is actually sent is reported. In response to the UE having no real physical channel to send, a power headroom after the physical channel is reference (or virtually) sent is reported.

Further, a reporting format of PHR MAC CE is shown in Table (2).

**Table (2)**

| C₇ | C₆ | C₅ | C₄ | C₃ | C₂ | C₁ | R |
|---|---|---|---|---|---|---|---|
| P | V | PH (Type 2, PCell) | | | | | |
| R | R | P_{CMAX,c} 1 | | | | | |
| P | V | PH (Type 1, PCell) | | | | | |
| R | R | P_{CMAX,c} 2 | | | | | |
| P | V | PH (Type x, SCell 1) | | | | | |
| R | R | P_{CMAX,c} 3 | | | | | |
| ... | | | | | | | |
| P | V | PH (Type x, SCell n) | | | | | |
| R | R | P_{CMAX,c} m | | | | | |

Meanings of relevant fields are as follows:
Ci: if a secondary cell (SCell) is configured with SCellIndex through a radio resource control (RRC) message, then this field indicates whether a PH field of the SCell configured with SCellIndex i is reported. The Ci field is set to "1" to indicate that the PH field of the SCell configured with SCellIndex i is reported. The Ci field is set to "0" to indicate that the PH field of the SCell configured with SCellIndex i is not reported.
R: reserved bit, set to "0".
V: this field indicates whether a reported PH value is based on actual transmission or reference format. For Type 1 PH, V=0 indicates PUSCH-based actual transmission, while V=1 indicates PUSCH-based reference format. For Type 2 PH, V=0 indicates PUCCH-based actual transmission, while V=1 indicates PUCCH-based reference format. For Type 3 PH, V=0 indicates SRS-based actual transmission, while V=1 indicates SRS-based reference format. In addition, for Type 1 PH, Type 2 PH and Type 3 PH, V=0 indicates that a reporting format includes a P_{CMAX,c} field corresponding to a certain cell, while V=1 indicates that the reporting format does not include the P_{CMAX,c} field corresponding to a certain cell.
PH: this field indicates a level of power headroom.
P: this field indicates whether a current MAC entity adopts a power backoff mechanism. When there is no power backoff, if the P_{CMAX,c} field corresponding to a certain cell has different values, the MAC entity sets P=1.
P_{CMAX,c}: if this field is present, it indicates a value of P_{CMAX,c} used to calculate a value of the corresponding PH field, that is, the maximum power that can be sent in the cell calculated by the UE.

Further, types of the PH include:
Type 1 PH: PH_{type1,c} (i)=P_{CMAX,c} -P_{PUSCH,c} (i)
Type 2 PH: PH_{type2,c} (i) = P_{CMAX,c} -P_{PUSCH,c} (i)-P_{PUCCH,c} (i)
Type 3 PH: PH_{type3 ,c}(i)=P_{CMAX,c} -P_{SRS,c} (i)
where "i" denotes a certain subframe "i".

P_{PUSCH,c} (i) is a transmitting power of an uplink data channel (PUSCH) obtained by the UE based on calculation. When the UE sends an actual signal, this value is determined based on an actual transmitted channel power. When the UE sends no actual signal, this value is determined based on a reference (or virtual) channel power.

P_{PUCCH,c} (i) is a transmitting power of an uplink control channel (PUCCH) obtained by the UE based on calculation. When the UE sends an actual signal, this value is determined based on an actual transmitted channel power. When the UE sends no actual signal, this value is determined based on a reference (or virtual) channel power.

P_{SRS,c} (i) is a transmitting power of an uplink sounding reference channel (SRS) obtained by the UE based on calculation. When the UE sends an actual signal, this value is determined based on an actual transmitted channel power. When the UE sends no actual signal, this value is determined based on a reference (or virtual) channel power.

It can be understood that the UE can be configured for single-carrier transmission or multi-carrier transmission. Cases corresponding to the multi-carrier transmission configuration are as follows:
carrier aggregation (CA) cell activation and deactivation status: when the UE is configured with CA, there may include a plurality of cells: one primary cell (PCell), one or more SCells; in the current CA configuration, there is one corresponding uplink carrier for one downlink carrier.
dual connectivity (DC): when the UE is configured with CA, there may include a plurality of cell groups: a master cell group (MCG) and a secondary cell group (SCG); the MCG includes one PCell and 0 or more SCells, the SCG includes 1 PSCell and 0 or more SCells.
supplement uplink carrier (SUL carrier): in the 5G system, one downlink carrier may be configured with two uplink carriers, one of which is the supplement uplink carrier. The supplement uplink carrier may be configured for the PCell or SCell.

It is understandable that the bottleneck of the current communication system is still a rate and coverage of the uplink transmission. Therefore, the system enhancement direction of the R18 standard is mainly to consider, in a multi-TRP scenario, using multiple panels for simultaneous uplink transmission to increase an uplink rate, and further improve reliability of transmission. The transmission may be scheduled based on one downlink control information (DCI) carried by one PDCCH channel, or may be scheduled based on different DCI carried by different PDCCHs respectively. The PUSCH transmission may be multi panel/TRP transmission based on a single PDCCH, that is, S-DCI (single DCI) scheduling, or may use a space division multiplexing (SDM)/frequency division multiplexing (FDM) multiplexing method, as shown in FIG. 3. The PUSCH transmission may also be multi panel/TRP transmission based on different PDCCHs, that is, M-DCI (multi-DCI) scheduling, or may use the SDM/FDM multiplexing method, as shown in FIG. 4.

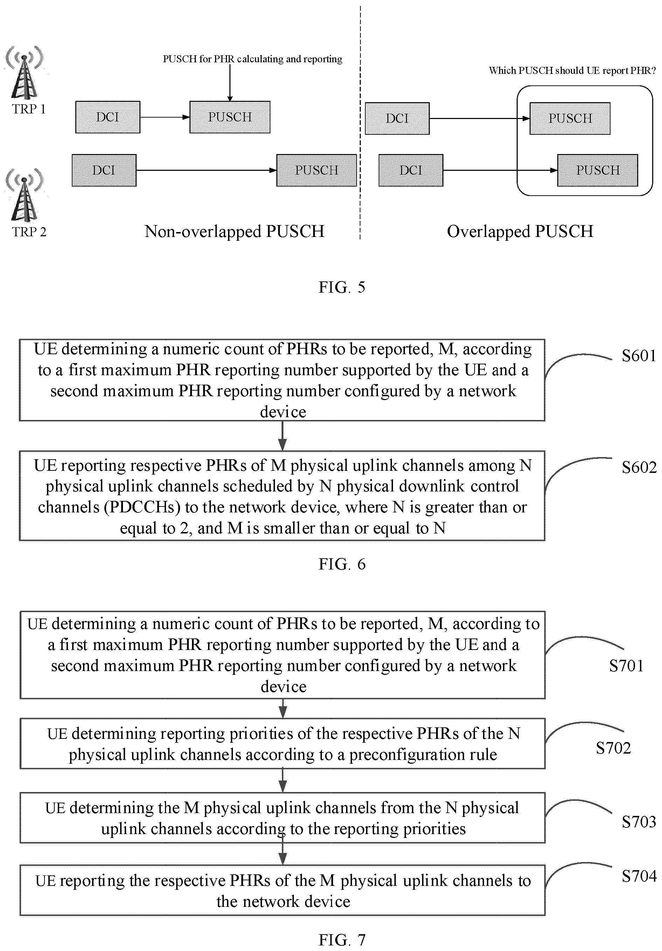

It may be further understood that for M-DCI scheduling, respective PUSCH transmissions are scheduled on different antenna panels through independent PDCCH scheduling information, as shown in FIG. 4, respectively represented as PUSCH1 and PUSCH2. Possible resource allocation methods corresponding to different PUSCHs scheduled by M-DCI are shown in FIG. 5, in which time domain resources fully overlap and frequency domain resources are not limited; or the time domain resources partially overlap and the frequency domain resources are not limited; or, the time domain resources do not overlap and the frequency domain resources are not limited.

Furthermore, in the R18, uplink multiple-input multiple-output (MIMO) enhancement considers to implement uplink simultaneous transmission for multi TRPs through multiple panels to further improve transmission throughput and transmission reliability of the uplink system. In order to support simultaneous uplink transmission based on multiple panels, the existing PHR reporting mechanism needs to be enhanced to provide a solution for reporting PHRs of physical uplink channel transmissions based on M-DCI scheduling.

In view of this, the present disclosure provides a power headroom report (PHR) reporting method based on multi downlink control information (M-DCI) and an apparatus thereof, capable of improving transmission throughput and transmission reliability of an uplink system transmission, and improving an accuracy of uplink transmission scheduling of each panel on a network side.

The power headroom report (PHR) reporting method based on multi downlink control information (M-DCI) and the apparatus thereof provided by the present disclosure is introduced in detail below with reference to the accompanying drawings.

FIG. 6 is a flowchart of a PHR reporting method based on M-DCI according to an embodiment of the disclosure. As shown in FIG. 6, the method may be performed by a user equipment (UE), and may include the following steps.

At step S601, the UE determines a numeric count of PHRs to be reported, M, according to a first maximum PHR reporting number supported by the UE and a second maximum PHR reporting number configured by a network device.

In some embodiments, M is the smaller one of the first maximum PHR reporting number supported by the UE and the second maximum PHR reporting number configured by the network device.

In an example, in a case where the UE only supports reporting of one PHR, the network device may generally configure and trigger reporting of at most one PHR.

In another example, in a case where the UE supports reporting of multiple PHRs, the network device may generally configure and trigger reporting of one or more PHRs.

At step S602, the UE reports respective PHRs of M physical uplink channels among N physical uplink channels scheduled by N physical downlink control channels (PDCCHs) to the network device, where N is greater than or equal to 2, and M is smaller than or equal to N.

Under the M-DCI scheduling, a plurality of physical uplink channels are scheduled by a plurality of PDCCHs. Each PDCCH schedules one physical uplink channel.

The UE reports the respective PHRs of the M physical uplink channels among the plurality of physical uplink channels to the network device according to the determined numeric count of PHRs to be reported, M.

According to the PHR reporting method based on M-DCI and the apparatus thereof in an embodiment of the present disclosure, the UE determines the numeric count of PHRs to be reported, M, according to the first maximum PHR reporting number supported by the UE and the second maximum PHR reporting number configured by the network device, and reports respective PHRs of M physical uplink channels among N physical uplink channels scheduled by N PDCCHs to the network device. Therefore, the PHR reporting method based on M-DCI and the apparatus thereof in an embodiment may report multi PHRs under M-DCI scheduling, support uplink simultaneous transmission based on multi panels, improve transmission throughput and transmission reliability of an uplink system transmission, and improve an accuracy of uplink transmission scheduling of each panel on a network side.

FIG. 7 is a flowchart of a PHR reporting method based on M-DCI according to an embodiment of the disclosure. As shown in FIG. 7, the method may be performed by a user equipment (UE), and may include the following steps.

At step S701, the UE determines a numeric count of PHRs to be reported, M, according to a first maximum PHR reporting number supported by the UE and a second maximum PHR reporting number configured by a network device.

Regarding specific implementation details of S701, reference may be made to details of the above step S601, which will not be described again herein.

At step S702, the UE determines reporting priorities of the respective PHRs of the N physical uplink channels according to a preconfiguration rule.

Under the M-DCI scheduling, for a plurality of uplink channels PUSCH/PUCCH scheduled by a plurality of PDCCHs, the UE may consider the reporting priorities of the respective PHRs of different uplink channels PUSCH/PUCCH according to the preconfiguration rule. The PUSCH may be a PUSCH supporting STxMP (simultaneous transmission from multiple panels).

In an embodiment, the corresponding preconfiguration rule may be determined based on resource allocation of N physical uplink channels. The resource allocation of the N physical uplink channels may be that time domain resources of the N physical uplink channels fully overlap, or the resource allocation of the N physical uplink channels may be that the time domain resources of the N physical uplink channels partially overlap or do not overlap.

At step S703, the UE determines the M physical uplink channels from the N physical uplink channels according to the reporting priorities.

After determining the reporting priorities of the respective PHRs of the N physical uplink channels under the M-DCI scheduling, the UE may determine the M physical uplink channels for which the PHRs are to be reported from the N physical uplink channels based on the reporting priorities.

At step S704, the UE reports the respective PHRs of the M physical uplink channels to the network device.

The UE reports the respective PHRs of the determined M physical uplink channels to the network device.

According to the PHR reporting method based on M-DCI in an embodiment of the present disclosure, the UE determines the numeric count of PHRs to be reported, M, according to the first maximum PHR reporting number supported by the UE and the second maximum PHR reporting number configured by the network device, and determines the reporting priorities of the respective PHRs of the N physical uplink channels scheduled by N PDCCHs according to the preconfiguration rule, and reports the respective PHRs of the M physical uplink channels according to the reporting priorities to the network device. Therefore, the PHR reporting method based on M-DCI in an embodiment of the present disclosure may determine the reporting priorities according to the preconfiguration rule, and report the PHRs based on the reporting priorities, which may, under M-DCI scheduling, support uplink simultaneous transmission based on multi panels, improve transmission throughput and transmission reliability of an uplink system transmission, and improve an accuracy of uplink transmission scheduling of each panel on a network side.

Embodiments of the present disclosure also provide a PHR reporting method based on M-DCI, which may be performed by a UE and may include steps S701-S704 shown in FIG. 7.

In some embodiments, in a case where time domain resources of the N physical uplink channels fully overlap, the preconfigured rule is that the reporting priorities of the PHRs depend on at least one of:
control resource set (CORESET) pool indexes associated with the physical uplink channels;
sending times of the PDCCHs corresponding to the physical uplink channels;
calculated values of the PHRs to be reported;
terminal capability indexes associated with transmission control information corresponding to the physical uplink channels; or
antenna panel identifiers associated with the physical uplink channels.

In an example, the UE may determine the reporting priorities of the PHRs based on different physical uplink channels, such as PUSCH and PUCCH, and a size of an associated CORESET Pool Index ID. For example, the smaller the CORESET Pool Index ID is, the higher a reporting priority of the PHR reported by a physical uplink channel associated with the CORESET Pool Index ID is. In another example, the larger the CORESET Pool Index ID is, the higher the reporting priority of the PHR reported by the physical uplink channel associated with the CORESET Pool Index ID is.

In another example, the UE may determine the reporting priorities of the PHR based on the sending time of the PDCCHs. For example, the earlier a sending time of a PDCCH is, the higher the reporting priority of the PHR reported by the physical uplink channel corresponding to the PDCCH is.

In this embodiment, the UE may calculate the values of the PHRs to be reported. Therefore, the UE may determine the reporting priorities of the PHRs according to the values of the PHRs to be reported. For example, the UE may set the smaller the value of the PHR to be reported, the higher the reporting priority of the PHR to be reported. In another example, the UE may set that when the value of the PHR to be reported is less than a predetermined threshold, the PHR to be reported has a high reporting priority.

In an example, the UE may determine the reporting priorities of the PHRs based on values of the terminal capability indexes (UE capability value indexes) associated with the transmission control information corresponding to the physical uplink channel s. For example, the UE may set the smaller the value of the UE capability value index, the higher the reporting priority of the PHR reported by the physical uplink channel corresponding to the UE capability value index. In another example, the UE may set the larger the value of the UE capability value index, the higher the reporting priority of the PHR reported by the physical uplink channel corresponding to the UE capability value index.

In another example, the UE may determine the reporting priorities of the PHRs based on values of panel ID corresponding to the antenna panel identifiers. For example, the UE may set the smaller the value of panel ID, the higher the reporting priority of the PHR reported by the physical uplink channel corresponding to the panel ID. For another example, the UE may also set the larger the value of the panel ID, the higher the reporting priority of the PHR reported by the physical uplink channel corresponding to the panel ID.

In some embodiments, in a case where the UE calculates the value of the PHR to be reported, the UE may calculate the value of the PHR to be reported based on a maximum transmitting power of a corresponding antenna panel or a maximum transmitting power of the UE.

In an example, the UE may calculate the value of the PHR to be reported for the corresponding PUSCH/PUCCH transmission occasion based on the maximum transmitting power Pcmax of the corresponding antenna panel.

In another example, the UE may calculate the value of the PHR to be reported for the corresponding PUSCH/PUCCH transmission occasion based on the maximum transmitting power Pcmax of the UE.

Although the above examples determine the reporting priorities of the PHRs based on one of the items listed above, it should be understood that the reporting priorities of the PHRs may be determined based on more than one item listed above. For example, in another example, the UE may determine the reporting priorities of the PHRs based on the sending times of the PDCCHs and sizes of the CORESET Pool Index IDs associated with the physical uplink channels. For example, in a case where the sending times of the PDCCHs are the same, the reporting priorities of the PHRs are further determined based on the sizes of the CORESET Pool Index IDs associated with the physical uplink channels. For example, the smaller the CORESET Pool Index ID, the higher the reporting priority of the PHR reported by the physical uplink channel corresponding to the PDCCH.

According to the PHR reporting method based on M-DCI in an embodiment of the present disclosure, the UE determines the reporting priority of each of one or more PHRs of the N physical uplink channels under the M-DCI scheduling according to the preconfiguration rule, and reports the M PHRs to the network device based on the reporting priorities. Therefore, the PHR reporting method based on M-DCI in an embodiment of the present disclosure may determine the reporting priorities according to the preconfiguration rule, and report the PHRs based on the reporting priorities, which may, under M-DCI scheduling, support uplink simultaneous transmission based on multi panels, improve transmission throughput and transmission reliability of an uplink system transmission, and improve an accuracy of uplink transmission scheduling of each panel on a network side.

Embodiments of the present disclosure also provide a PHR reporting method based on M-DCI, which may be performed by a UE and may include steps S701-S704 shown in FIG. 7.

In some embodiments, in a case where time domain resources of the N physical uplink channels partially overlap or do not overlap, the preconfigured rule is that the reporting priorities of the PHRs depends on at least one of:
sending times of the physical uplink channels;
control resource set (CORESET) pool indexes associated with the physical uplink channels;
sending times of the PDCCHs corresponding to the physical uplink channels;
calculated values of the PHRs to be reported;
terminal capability indexes associated with transmission control information corresponding to the physical uplink channels; or
antenna panel identifiers associated with the physical uplink channels.

In an example, the UE may determine the reporting priorities of the PHRs according to the sending times of the PUSCHs/PUCCHs. For example, the earlier the sending time of the PUSCH/PUCCH, the higher the reporting priority of the PHR reported by the physical uplink channel corresponding to the PUSCH/PUCCH.

In another example, the UE may determine the reporting priorities of the PHRs based on different physical uplink channels, such as PUSCH and PUCCH, and a size of an associated CORESET Pool Index ID. For example, the smaller the CORESET Pool Index ID is, the higher a reporting priority of the PHR reported by a physical uplink channel associated with the CORESET Pool Index ID is. In another example, the larger the CORESET Pool Index ID is, the higher the reporting priority of the PHR reported by the physical uplink channel associated with the CORESET Pool Index ID is.

In an embodiment, the UE may determine the reporting priorities of the PHR based on the sending time of the PDCCHs. For example, the earlier a sending time of a PDCCH is, the higher the reporting priority of the PHR reported by the physical uplink channel corresponding to the PDCCH is.

In an embodiment, the UE may calculate the values of the PHRs to be reported. Therefore, the UE may determine the reporting priorities of the PHRs according to the values of the PHRs to be reported. For example, the UE may set the smaller the value of the PHR to be reported, the higher the reporting priority of the PHR to be reported. In another example, the UE may set that when the value of the PHR to be reported is less than a predetermined threshold, the PHR to be reported has a high reporting priority.

In an example, the UE may determine the reporting priorities of the PHRs based on values of the terminal capability indexes (UE capability value indexes) associated with the transmission control information corresponding to the physical uplink channel s. For example, the UE may set the smaller the value of the UE capability value index, the higher the reporting priority of the PHR reported by the physical uplink channel corresponding to the UE capability value index. In another example, the UE may set the larger the value of the UE capability value index, the higher the reporting priority of the PHR reported by the physical uplink channel corresponding to the UE capability value index.

In another example, the UE may determine the reporting priorities of the PHRs based on values of panel ID corresponding to the antenna panel identifiers. For example, the UE may set the smaller the value of panel ID, the higher the reporting priority of the PHR reported by the physical uplink channel corresponding to the panel ID. For another example, the UE may also set the larger the value of the panel ID, the higher the reporting priority of the PHR reported by the physical uplink channel corresponding to the panel ID.

In some embodiments, in a case where the UE calculates the value of the PHR to be reported, the UE may calculate the value of the PHR to be reported based on a maximum transmitting power of a corresponding antenna panel or a maximum transmitting power of the UE.

In an example, the UE may calculate the value of the PHR to be reported for the corresponding PUSCH/PUCCH transmission occasion based on the maximum transmitting power Pcmax of the corresponding antenna panel.

In another example, the UE may calculate the value of the PHR to be reported for the corresponding PUSCH/PUCCH transmission occasion based on the maximum transmitting power Pcmax of the UE.

Although the above examples determine the reporting priorities of the PHRs based on one of the items listed above, it should be understood that the reporting priorities of the PHRs may be determined based on more than one item listed above. For example, in another example, the UE may determine the reporting priorities of the PHRs based on the sending times of the PDCCHs and sizes of the CORESET Pool Index IDs associated with the physical uplink channels. For example, in a case where the sending times of the PDCCHs are the same, the reporting priorities of the PHRs are further determined based on the sizes of the CORESET Pool Index IDs associated with the physical uplink channels. For example, the smaller the CORESET Pool Index ID, the higher the reporting priority of the PHR reported by the physical uplink channel corresponding to the PDCCH.

According to the PHR reporting method based on M-DCI in an embodiment of the present disclosure, the UE determines the reporting priority of each of one or more PHRs of the N physical uplink channels under the M-DCI scheduling according to the preconfiguration rule, and reports the M PHRs to the network device based on the reporting priorities. Therefore, the PHR reporting method based on M-DCI in an embodiment of the present disclosure may determine the reporting priorities according to the preconfiguration rule, and report the PHRs based on the reporting priorities, which may, under M-DCI scheduling, support uplink simultaneous transmission based on multi panels, improve transmission throughput and transmission reliability of an uplink system transmission, and improve an accuracy of uplink transmission scheduling of each panel on a network side.

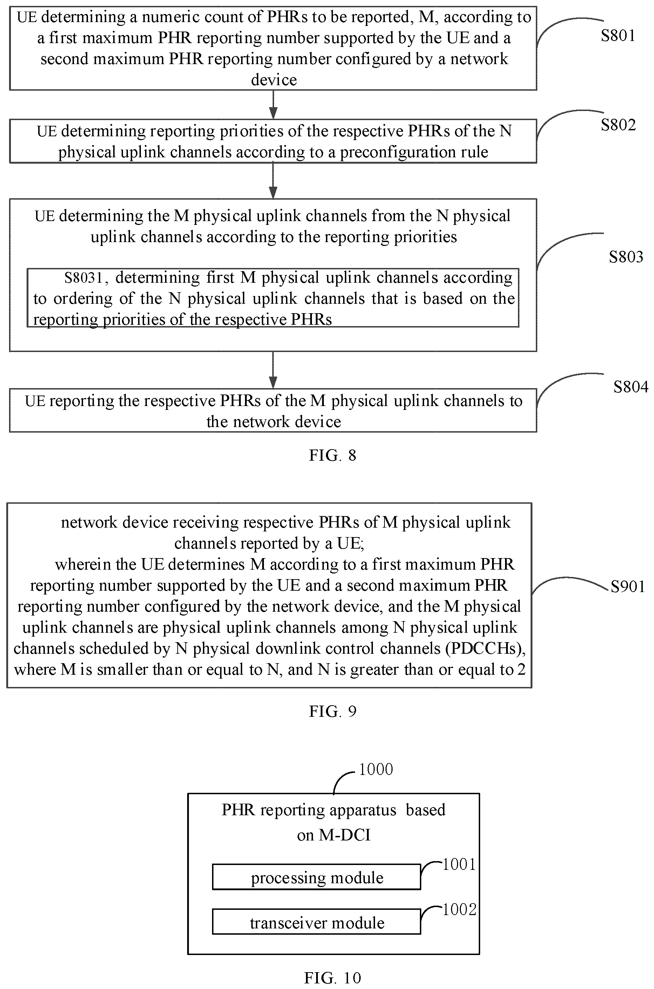

FIG. 8 is a flowchart of a PHR reporting method based on M-DCI according to an embodiment of the disclosure. As shown in FIG. 8, the method may be performed by a user equipment (UE), and may include the following steps.

At step S801, the UE determines a numeric count of PHRs to be reported, M, according to a first maximum PHR reporting number supported by the UE and a second maximum PHR reporting number configured by a network device.

At step S802, the UE determines reporting priorities of the respective PHRs of the N physical uplink channels according to a preconfiguration rule.

At step S803, the UE determines the M physical uplink channels from the N physical uplink channels according to the reporting priorities.

At step S804, the UE reports the respective PHRs of the M physical uplink channels to the network device.

For the description and specific details of the above steps S801 -S804, reference may be made to the relevant description and details of the above steps S701-S704.

In an example, after determining the respective reporting priorities of the PHRs of the N physical uplink channels under the M-DCI scheduling according to the preconfiguration rule, the UE may rank the N physical uplink channels according to a reporting priority order of the respective PHRs, and report the respective PHRs of the first M physical uplink channels.

In some embodiments, the above step S803 may include the following step:
At step S8031, the first M physical uplink channels are determined according to ordering of the N physical uplink channels that is based on the reporting priorities of the respective PHRs.

For example, under M-DCI scheduling, for four uplink channels PUSCH/PUCCH scheduled by four PDCCHs, in a case where the UE only supports reporting two PHRs, the network device configures and triggers reporting of up to two PHRs. At this point, the UE determines that the numeric count of PHRs to be reported is 2. The UE may rank the four physical uplink channels according to reporting priorities of the respective PHRs of the four physical uplink channels, and report the respective PHRs of two physical uplink channels ranked first (that is, with higher priority) to the network device.

In some embodiments, in a case of reporting the respective PHRs of the M physical uplink channels, the respective PHRs of the M physical uplink channels may be reported in sequence from high to low in the order of the reporting priorities of the respective PHRs of the M physical uplink channels. That is, in response to reporting the respective PHRs of two physical uplink channels, and a reporting priority of a PHR of a first physical uplink channel being higher than a reporting priority of a PHR of a second physical uplink channel, the PHR of the first physical uplink channel is reported first, then the PHR of the second physical uplink channel is reported.

According to the PHR reporting method based on M-DCI in an embodiment of the present disclosure, the UE determines the reporting priority of each of one or more PHRs of the N physical uplink channels under the M-DCI scheduling according to the preconfiguration rule, and reports the M PHRs to the network device based on the reporting priorities. Therefore, the PHR reporting method based on M-DCI in an embodiment of the present disclosure may determine the reporting priorities according to the preconfiguration rule, and report the PHRs based on the reporting priorities, which may, under M-DCI scheduling, support uplink simultaneous transmission based on multi panels, improve transmission throughput and transmission reliability of an uplink system transmission, and improve an accuracy of uplink transmission scheduling of each panel on a network side.

FIG. 9 is a flowchart of a PHR reporting method based on M-DCI according to an embodiment of the disclosure. As shown in FIG. 9, the method may be performed by a network device, and may include the following steps.

At step S901, the network device receives respective PHRs of M physical uplink channels reported by a UE.

The UE determines M according to a first maximum PHR reporting number supported by the UE and a second maximum PHR reporting number configured by the network device, and the M physical uplink channels are physical uplink channels among N physical uplink channels scheduled by N physical downlink control channels (PDCCHs), where M is smaller than or equal to N, and N is greater than or equal to 2.

In some embodiments, M is the smaller one of the first maximum PHR reporting number supported by the UE and the second maximum PHR reporting number configured by the network device.

In some embodiments, the UE determines reporting priorities of the respective PHRs of the N physical uplink channels according to a preconfiguration rule; and determine the M physical uplink channels from the N physical uplink channels according to the reporting priorities.

In some embodiments, in a case where time domain resources of the N physical uplink channels fully overlap, the preconfigured rule is that the reporting priorities of the PHRs depend on at least one of:
control resource set (CORESET) pool indexes associated with the physical uplink channels;
sending times of the PDCCHs corresponding to the physical uplink channels;
calculated values of the PHRs to be reported;
terminal capability indexes associated with transmission control information corresponding to the physical uplink channels; or
antenna panel identifiers associated with the physical uplink channels.

In some embodiments, in a case where time domain resources of the N physical uplink channels partially overlap or do not overlap, the preconfigured rule is that the reporting priorities of the PHRs depends on at least one of:
sending times of the physical uplink channels;
control resource set (CORESET) pool indexes associated with the physical uplink channels;
sending times of the PDCCHs corresponding to the physical uplink channels;
calculated values of the PHRs to be reported;
terminal capability indexes associated with transmission control information corresponding to the physical uplink channels; or
antenna panel identifiers associated with the physical uplink channels.

In some embodiments, for any two physical uplink channels,
in a case where a CORESET pool index associated with a first physical uplink channel is less than a CORESET pool index associated with a second physical uplink channel, a reporting priority of a PHR of the first physical uplink channel is higher than a reporting priority of a PHR of the second physical uplink channel;
in a case where a PDCCH sending time corresponding to the first physical uplink channel is earlier than a PDCCH sending time corresponding to the second physical uplink channel, the reporting priority of the PHR of the first physical uplink channel is higher than the reporting priority of the PHR of the second physical uplink channel;
in a case where a value of a PHR to be reported of the first physical uplink channel is less than a value of a PHR to be reported of the second physical uplink channel, the reporting priority of the PHR of the first physical uplink channel is higher than the reporting priority of the PHR of the second physical uplink channel;
in a case where a terminal capability index associated with transmission control information corresponding to the first physical uplink channel is less than a terminal capability index associated with transmission control information corresponding to the second physical uplink channel, the reporting priority of the PHR of the first physical uplink channel is higher than the reporting priority of the PHR of the second physical uplink channel; or
in a case where an antenna panel identifier associated with the first physical uplink channel is less than an antenna panel identifier associated with the second physical uplink channel, the reporting priority of the PHR of the first physical uplink channel is higher than the reporting priority of the PHR of the second physical uplink channel.

In some embodiments, for any two physical uplink channels, in a case where a sending time of a first physical uplink channel is earlier than a sending time of a second physical uplink channel, a reporting priority of a PHR of the first physical uplink channel is higher than a reporting priority of a PHR of the second physical uplink channel.

In some embodiments, each of the values of the PHRs to be reported is calculated based on a maximum transmitting power of a corresponding antenna panel or a maximum transmitting power of the UE.

The network device side and the UE side performs corresponding methods. For specific details on the network device side, reference may be made to the relevant description on the UE side, which will not be described again herein.

According to the PHR reporting method based on M-DCI in an embodiment of the present disclosure, the network device receives the M PHRs reported by the UE based on the reporting priority of each of one or more PHRs of N physical uplink channels under M-DCI scheduling. With receiving the PHRs reported based on the reporting priorities, the disclosure may, under M-DCI scheduling, support uplink simultaneous transmission based on multi panels, improve transmission throughput and transmission reliability of an uplink system transmission, and improve an accuracy of uplink transmission scheduling of each panel on a network side.

In the above embodiments of the disclosure, the methods according to the embodiments of the disclosure are described from the perspectives of the user equipment and the network device, respectively. In order to realize each of functions in the methods according to the above embodiments of the disclosure, the user equipment and the network device may include a hardware structure, a software module, and realize each of the above functions in the form of hardware structure, software module, or a combination of hardware structure and software module. A certain function of the above functions may be performed in the form of hardware structure, software module, or a combination of hardware structure and software module. \

Corresponding to the PHR reporting method based on M-DCI provided by the above-mentioned several embodiments, the present disclosure also provides a PHR reporting apparatus based on M-DCI, since the PHR reporting apparatus based on M-DCI provided by embodiments of the present disclosure is consistent with the PHR reporting method based on M-DCI provided by the above-mentioned several embodiments, the implementations of the PHR reporting method based on M-DCI is also applicable to the PHR reporting apparatus based on M-DCI provided in this embodiment, and will not be described in detail in this embodiment.

FIG. 10 is a schematic structural diagram of a PHR reporting apparatus 1000 based on M-DCI provided by an embodiment of the present disclosure. The PHR reporting apparatus 1000 based on M-DCI may be configured in a user equipment (UE).

As shown in FIG. 10, the apparatus 1000 may include a processing module 1001 and a transceiver module 1002.

The processing module 1001 is configured to determine a numeric count of PHRs to be reported, M, according to a first maximum PHR reporting number supported by the UE and a second maximum PHR reporting number configured by a network device.

The transceiver module 1002 is configured to report respective PHRs of M physical uplink channels among N physical uplink channels scheduled by N physical downlink control channels (PDCCHs) to the network device, where N is greater than or equal to 2, and M is smaller than or equal to N.

According to the PHR reporting apparatus based on M-DCI, the UE determines the numeric count of PHRs to be reported, M, according to the first maximum PHR reporting number supported by the UE and the second maximum PHR reporting number configured by the network device, and reports respective PHRs of M physical uplink channels among N physical uplink channels scheduled by N PDCCHs to the network device. Therefore, the PHR reporting method based on M-DCI and the apparatus thereof in an embodiment may report multi PHRs under M-DCI scheduling, support uplink simultaneous transmission based on multi panels, improve transmission throughput and transmission reliability of an uplink system transmission, and improve an accuracy of uplink transmission scheduling of each panel on a network side.

In some embodiments, M is the smaller one of the first maximum PHR reporting number supported by the UE and the second maximum PHR reporting number configured by the network device.

In some embodiments, the processing module 1001 is further configured to determine reporting priorities of the respective PHRs of the N physical uplink channels according to a preconfiguration rule; and determine the M physical uplink channels from the N physical uplink channels according to the reporting priorities; and
In some embodiments, in a case where time domain resources of the N physical uplink channels fully overlap, the preconfigured rule is that the reporting priorities of the PHRs depend on at least one of:
control resource set CORESET pool indexes associated with the physical uplink channels;
sending times of the PDCCHs corresponding to the physical uplink channels;
calculated values of the PHRs to be reported;
terminal capability indexes associated with transmission control information corresponding to the physical uplink channels; or
antenna panel identifiers associated with the physical uplink channels.

In some embodiments, in a case where time domain resources of the N physical uplink channels partially overlap or do not overlap, the preconfigured rule is that the reporting priorities of the PHRs depends on at least one of:
sending times of the physical uplink channels;
control resource set CORESET pool indexes associated with the physical uplink channels;
sending times of the PDCCHs corresponding to the physical uplink channels;
calculated values of the PHRs to be reported;
terminal capability indexes associated with transmission control information corresponding to the physical uplink channels; or
antenna panel identifiers associated with the physical uplink channels.

In some embodiments, the processing module 1001 is further configured to calculate each of the values of the PHRs to be reported based on a maximum transmitting power of a corresponding antenna panel or a maximum transmitting power of the UE.

In some embodiments, for any two physical uplink channels,
in a case where a CORESET pool index associated with a first physical uplink channel is less than a CORESET pool index associated with a second physical uplink channel, a reporting priority of a PHR of the first physical uplink channel is higher than a reporting priority of a PHR of the second physical uplink channel;
in a case where a PDCCH sending time corresponding to the first physical uplink channel is earlier than a PDCCH sending time corresponding to the second physical uplink channel, the reporting priority of the PHR of the first physical uplink channel is higher than the reporting priority of the PHR of the second physical uplink channel;
in a case where a value of a PHR to be reported of the first physical uplink channel is less than a value of a PHR to be reported of the second physical uplink channel, the reporting priority of the PHR of the first physical uplink channel is higher than the reporting priority of the PHR of the second physical uplink channel;
in a case where a terminal capability index associated with transmission control information corresponding to the first physical uplink channel is less than a terminal capability index associated with transmission control information corresponding to the second physical uplink channel, the reporting priority of the PHR of the first physical uplink channel is higher than the reporting priority of the PHR of the second physical uplink channel; or
in a case where an antenna panel identifier associated with the first physical uplink channel is less than an antenna panel identifier associated with the second physical uplink channel, the reporting priority of the PHR of the first physical uplink channel is higher than the reporting priority of the PHR of the second physical uplink channel.

In some embodiments, for any two physical uplink channels, in a case where a sending time of a first physical uplink channel is earlier than a sending time of a second physical uplink channel, a reporting priority of a PHR of the first physical uplink channel is higher than a reporting priority of a PHR of the second physical uplink channel.

In some embodiments, the transceiver module 1002 is configured to determine first M physical uplink channels according to ordering of the N physical uplink channels that is based on the reporting priorities of the respective PHRs.

According to a fourth aspect of embodiments of the disclosure, a PHR reporting apparatus based on M-DCI is provided. The apparatus is configured in a network device, and includes:

a transceiver module, configured to receive respective PHRs of M physical uplink channels reported by a UE;

in which, the UE determines M according to a first maximum PHR reporting number supported by the UE and a second maximum PHR reporting number configured by the network device, and the M physical uplink channels are physical uplink channels among N physical uplink channels scheduled by N physical downlink control channels (PDCCHs), where M is smaller than or equal to N, and N is greater than or equal to 2.

Optionally, M is the smaller one of the first maximum PHR reporting number supported by the UE and the second maximum PHR reporting number configured by the network device.

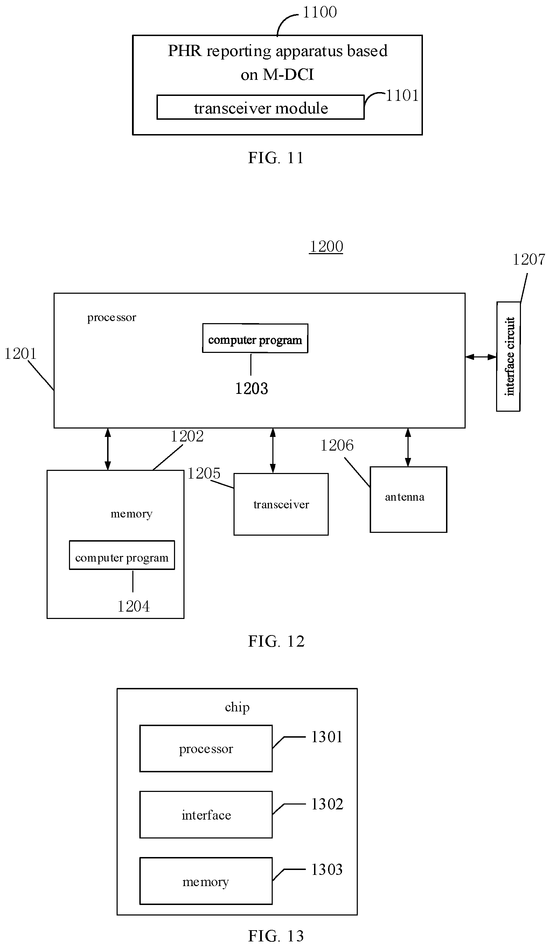

FIG. 11 is a schematic structural diagram of a PHR reporting apparatus 1100 based on M-DCI provided by an embodiment of the present disclosure. The PHR reporting apparatus 1100 based on M-DCI may be configured in a network device.

As shown in FIG. 11, the apparatus 1100 may include a transceiver module 1101.

The transceiver module 1101 is configured to receive respective PHRs of M physical uplink channels reported by a UE.

The UE determines M according to a first maximum PHR reporting number supported by the UE and a second maximum PHR reporting number configured by the network device, and the M physical uplink channels are physical uplink channels among N physical uplink channels scheduled by N physical downlink control channels (PDCCHs), where M is smaller than or equal to N, and N is greater than or equal to 2.

According to the PHR reporting apparatus based on M-DCI, the UE determines the numeric count of PHRs to be reported, M, according to the first maximum PHR reporting number supported by the UE and the second maximum PHR reporting number configured by the network device, and reports respective PHRs of M physical uplink channels among N physical uplink channels scheduled by N PDCCHs to the network device. Therefore, the PHR reporting method based on M-DCI and the apparatus thereof in an embodiment may report multi PHRs under M-DCI scheduling, support uplink simultaneous transmission based on multi panels, improve transmission throughput and transmission reliability of an uplink system transmission, and improve an accuracy of uplink transmission scheduling of each panel on a network side.

Please refer to FIG. 12, FIG. 12 is a schematic structural diagram of a communication device 1200 provided by an embodiment of the present application. The communication device 1200 may be a network device, a user equipment, a chip, a chip system, or a processor that supports the network device to implement the above method, or a chip, a chip system, or a processor that supports the user equipment to implement the above method. The device can be used to implement the method described in the above method embodiment. For details, please refer to the description in the above method embodiment.

The communication device 1200 may include one or more processors 1201. The processor 1201 may be a general purpose processor or a dedicated processor, such as, a baseband processor or a central processor. The baseband processor is used for processing communication protocols and communication data. The central processor is used for controlling the communication device (e.g., base station, baseband chip, terminal device, terminal device chip, DU, or CU), executing computer programs, and processing data of the computer programs.

Optionally, the communication device 1200 may include one or more memories 1202 on which computer programs 1204 may be stored. The processor 1201 executes the computer programs 1204 to cause the communication device 1200 to perform the methods described in the above method embodiments. Optionally, data may also be stored in the memory 1202. The communication device 1200 and the memory 1202 may be set separately or integrated together.

Optionally, the communication device 1200 may also include a transceiver 1205 and an antenna 1206. The transceiver 1205 may be referred to as transceiver unit, transceiver machine, or transceiver circuit, for realizing the transceiver function. The transceiver 1205 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication device 1200 may also include one or more interface circuits 1207. The interface circuits 1207 are used to receive code instructions and transmit them to the processor 1201. The processor 1201 runs the code instructions to cause the communication device 1200 to perform the method described in the method embodiments.

In an implementation, the processor 1201 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1201 may store a computer program 1203, and the computer program 1203 runs on the processor 1201, causing the communication device 1200 to perform the method described in the above method embodiment. The computer program 1203 may be solidified in the processor 1201, in which case the processor 1201 may be implemented by hardware.

In one implementation, the communication device 1200 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a user equipment, but the scope of the communication device described in the disclosure is not limited thereto, and the structure of the communication device may not be limited by FIG. 12. The communication device may be a stand-alone device or may be part of a larger device. For example, the described communication device may be:
(1) a stand-alone integrated circuit (IC), or chip, or chip system or subsystem;
(2) a set of ICs including one or more ICs, optionally, the set of ICs may also include storage components for storing data and computer programs;
(3) an ASIC, such as a modem;
(4) a module that can be embedded in other devices;
(5) a receiver, a terminal device, a smart terminal device, a cellular phone, a wireless device, a handheld machine, a mobile unit, an in-vehicle device, a network side device, a cloud device, an artificial intelligence device, and the like;; and
(6) others.

The case where the communication device may be a chip or a chip system may be referred to the schematic structural diagram of the chip shown in FIG. 13. In FIG. 13, the chip includes a processor 1301 and an interface 1302. There may be one or more processors 1301, and there may be multiple interfaces 1302.

Optionally, the chip further includes a memory 1303 used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

As used herein, the terms "machine-readable medium" and "computer-readable medium" refer to as any computer program product, device, and/or apparatus (for example, a magnetic disk, an optical disk, a memory, a programmable logic device (PLD)) for providing machine instructions and/or data to a programmable processor, including a machine-readable medium that receives machine instructions as machine-readable signals. The term "machine-readable signal" refers to as any signal for providing the machine instructions and/or data to the programmable processor.

The systems and techniques described herein may be implemented in a computing system including a back-end component (e.g., as a data server), or a computing system including a middleware component (e.g., an application server), or a computing system including a front-end component (e.g., a user computer having a graphical user interface or web browser through which the user can interact with implementations of the systems and technologies described herein), or a computing system including any combination of such backend component, middleware component, or front-end component. The components of the system may be interconnected by any form or medium of digital data communication (e. g., a communications network). Examples of communication networks may include: a local area network (LAN), a wide area network (WAN), and the Internet.

The computer system may include a client and a server. The client and the server are generally remote from each other and typically interact over the communications network. The relationship of client and server is created by a computer program running on corresponding computers and having a client-server relationship with each other.

It should be understood that various forms of the process shown above may be used, with steps reordered, added or deleted. For example, each step described in the present disclosure may be executed in parallel, sequentially, or in a different order. As long as the desired results of the technical solution disclosed in the present disclosure can be achieved. The present disclosure does not limit it herein.

In addition, it should be understood that various embodiments of the present disclosure may be implemented alone or in combination with other embodiments if the solution allows.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A power headroom report (PHR) reporting method based on multi downlink control information (M-DCI), performed by a user equipment (UE), comprising:
determining a numeric count of PHRs to be reported, M, according to a first maximum PHR reporting number supported by the UE and a second maximum PHR reporting number configured by a network device; and
reporting respective PHRs of M physical uplink channels among N physical uplink channels scheduled by N physical downlink control channels (PDCCHs) to the network device, where N is greater than or equal to 2, and M is smaller than or equal to N.

2. The method according to claim 1, wherein M is the smaller one of the first maximum PHR reporting number supported by the UE and the second maximum PHR reporting number configured by the network device.

3. The method according to claim 1, further comprising:
determining reporting priorities of the respective PHRs of the N physical uplink channels according to a preconfiguration rule;
wherein reporting the respective PHRs of the M physical uplink channels among the N physical uplink channels scheduled by the N PDCCHs to the network device comprises:
determining the M physical uplink channels from the N physical uplink channels according to the reporting priorities; and
reporting the respective PHRs of the M physical uplink channels to the network device.

4. The method according to claim 3, wherein in a case where time domain resources of the N physical uplink channels fully overlap, the preconfigured rule is that the reporting priorities of the PHRs depend on at least one of:
control resource set (CORESET) pool indexes associated with the physical uplink channels;
sending times of the PDCCHs corresponding to the physical uplink channels;
calculated values of the PHRs to be reported;
terminal capability indexes associated with transmission control information corresponding to the physical uplink channels; or
antenna panel identifiers associated with the physical uplink channels.

5. The method according to claim 3, wherein in a case where time domain resources of the N physical uplink channels partially overlap or do not overlap, the preconfigured rule is that the reporting priorities of the PHRs depends on at least one of:
sending times of the physical uplink channels;
control resource set (CORESET) pool indexes associated with the physical uplink channels;
sending times of the PDCCHs corresponding to the physical uplink channels;
calculated values of the PHRs to be reported;
terminal capability indexes associated with transmission control information corresponding to the physical uplink channels; or
antenna panel identifiers associated with the physical uplink channels.

6. The method according to claim 4 or 5, wherein each of the values of the PHRs to be reported is calculated based on a maximum transmitting power of a corresponding antenna panel or a maximum transmitting power of the UE.

7. The method according to claim 4 or 5, wherein, for any two physical uplink channels,
in a case where a CORESET pool index associated with a first physical uplink channel is less than a CORESET pool index associated with a second physical uplink channel, a reporting priority of a PHR of the first physical uplink channel is higher than a reporting priority of a PHR of the second physical uplink channel;
in a case where a PDCCH sending time corresponding to the first physical uplink channel is earlier than a PDCCH sending time corresponding to the second physical uplink channel, the reporting priority of the PHR of the first physical uplink channel is higher than the reporting priority of the PHR of the second physical uplink channel;
in a case where a value of a PHR to be reported of the first physical uplink channel is less than a value of a PHR to be reported of the second physical uplink channel, the reporting priority of the PHR of the first physical uplink channel is higher than the reporting priority of the PHR of the second physical uplink channel;
in a case where a terminal capability index associated with transmission control information corresponding to the first physical uplink channel is less than a terminal capability index associated with transmission control information corresponding to the second physical uplink channel, the reporting priority of the PHR of the first physical uplink channel is higher than the reporting priority of the PHR of the second physical uplink channel; or
in a case where an antenna panel identifier associated with the first physical uplink channel is less than an antenna panel identifier associated with the second physical uplink channel, the reporting priority of the PHR of the first physical uplink channel is higher than the reporting priority of the PHR of the second physical uplink channel.

8. The method according to claim 5, wherein, for any two physical uplink channels,
in a case where a sending time of a first physical uplink channel is earlier than a sending time of a second physical uplink channel, a reporting priority of a PHR of the first physical uplink channel is higher than a reporting priority of a PHR of the second physical uplink channel.

9. The method of claim 3, wherein determining the M physical uplink channels from the N physical uplink channels according to the reporting priorities comprises:
determining first M physical uplink channels according to ordering of the N physical uplink channels that is based on the reporting priorities of the respective PHRs.

10. A power headroom report (PHR) reporting method based on multi downlink control information (M-DCI), performed by a network device, comprising:
receiving respective PHRs of M physical uplink channels reported by a user equipment (UE);
wherein the UE determines M according to a first maximum PHR reporting number supported by the UE and a second maximum PHR reporting number configured by the network device, and the M physical uplink channels are physical uplink channels among N physical uplink channels scheduled by N physical downlink control channels (PDCCHs), where M is smaller than or equal to N, and N is greater than or equal to 2.

11. The method of claim 10, wherein M is the smaller one of the first maximum PHR reporting number supported by the UE and the second maximum PHR reporting number configured by the network device.

12. A power headroom report (PHR) reporting apparatus based on multi downlink control information (M-DCI), configured in a user equipment (UE), comprising:
a processing module, configured to determine a numeric count of PHRs to be reported, M, according to a first maximum PHR reporting number supported by the UE and a second maximum PHR reporting number configured by a network device; and
a transceiver module, configured to report respective PHRs of M physical uplink channels among N physical uplink channels scheduled by N physical downlink control channels (PDCCHs) to the network device, where N is greater than or equal to 2, and M is smaller than or equal to N.

13. A power headroom report (PHR) reporting apparatus based on multi downlink control information (M-DCI), configured in a network device, comprising:
a transceiver module, configured to receive respective PHRs of M physical uplink channels reported by a user equipment (UE);
wherein the UE determines M according to a first maximum PHR reporting number supported by the UE and a second maximum PHR reporting number configured by the network device, and the M physical uplink channels are physical uplink channels among N physical uplink channels scheduled by N physical downlink control channels (PDCCHs), where M is smaller than or equal to N, and N is greater than or equal to 2.

14. A communication device, comprising: a transceiver; a memory; and a processor, coupled to the transceiver and the memory, respectively, and configured to execute computer-executable instructions on the memory, control the transceiver to transmit and receive wireless and implement the method according to any one of claims 1 to 11.

15. A system, comprising a user equipment (UE) and a network device, wherein the UE is configured to perform the method according to any one of claims 1-9, and the network device is configured to perform the method according to any one of claims 10-11.

16. A computer storage medium, storing computer-executable instructions, wherein, when the computer-executable instructions are executed by a processor, the method according to any one of claims 1 to 11 is implemented.
